# DEMANDE DE BREVET EUROPEEN

(11) **EP 0 992 966 A2**
(43) Date de publication de la demande: **12.04.2000**
(21) Numéro de dépôt: 99203162.5
(22) Date de dépôt: 28.09.1999
(51) Int. Cl.: G09B 9/042

(54) **Dispositif de simulation et d'analyse de situations routeères à risques**

(30) Priorité: 30.09.1998 BE 9800700
(71) Demandeur: Defays, Gérard, 5360 Hamois (BE)
(72) Inventeur: Defays, Gérard, 5360 Hamois (BE)
(74) Mandataire: Vanderperre, Robert

(57) **Abrégé**

Sur une piste de circulation routière sont répartis plusieurs modules balises (11) portant chacun au moins une balise activable (50) et comportant des moyens de commande pour activer la balise ou chaque balise (50) en réponse à un signal de commande d'activation. Une centrale de commande (12) est agencée pour produire une séquence de signaux de commande d'activation de balises parmi plusieurs séquences de signaux de commande. La centrale de commande (12) produit une séquence de signaux de commande d'activation sélectionnée en réponse à un signal d'activation, et produit un signal de commande de désactivation pour désactiver les balises en réponse à un signal de commande de désactivation.

## Description

La présente invention se rapporte au domaine de l'apprentissage de la conduite automobile. Elle concerne plus particulièrement un dispositif de test et d'analyse utile pour l'apprentissage et le perfectionnement de la conduite et de la maîtrise automobile.

Dans les centres spécialisés dans le domaine de l'apprentissage et du perfectionnement de conduite et de maîtrise automobiles, qui organisent des tests, cours, stages et/ou recyclages, on emploie couramment des balises statiques telles que cônes, blocs de mousse ou de carton, tubes PVC, îlots directionnels, etc., ainsi que divers ballons lancés manuellement et d'autres artifices.

Ces pratiques pédagogiques donnent une très grande confiance en soi, mais, parce qu'elles ne simulent pas concrètement des situations routières réelles, elles négligent quelque peu les aspects de responsabilisation et de sensibilisation du conducteur. De plus, elles demandent une manipulation astreignante et épuisante des balises et autres artifices, et provoquent des pertes de temps considérables. De plus, elles limitent la prise en charge de stagiaires par instructeur qualifié, rendent le travail nocturne très délicat et exigent une surface de travail sur piste imposante. Enfin, elles peuvent provoquer des dégâts aux véhicules et sont forcément d'un coût relativement élevé.

La présente invention a pour but de remédier à ces inconvénients. Sachant que plus de 90 % des accidents de la route sont causés par des erreurs humaines, souvent dues à un comportement irresponsable des conducteurs, l'invention se base sur un concept pédagogique sensoriel et propose un dispositif qui permet de simuler avec un maximum de réalisme et d'analyser un nombre quasi illimité de situations routières à risques qui sont souvent à l'origine de trop nombreux accidents de la route.

Ce but est atteint, suivant l'invention, par un dispositif de simulation et d'analyse comprenant une piste de circulation automobile équipée de plusieurs modules balises enfouis dans le sol et portant chacun une ou plusieurs balises activables sélectivement de manière à les rendre visibles pour le conducteur d'un véhicule en exercice sur la piste. Les modules balises sont reliés à une centrale de commande agencée pour commander sélectivement les modules balises afin qu'ils activent leurs balises pour les rendre visibles pendant des intervalles de temps déterminés. Ces balises peuvent ainsi surgir sélectivement et dans des ordres de succession variables de manière à simuler, avec un maximum de réalisme, divers obstacles fixes et/ou en mouvement pouvant surgir inopinément dans des situations routières à risques, souvent à l'origine d'accidents de la route.

C'est ainsi, par exemple, que le dispositif suivant l'invention permet avantageusement de simuler la présence d'arbres le long de la route, la présence d'un véhicule en panne sur la route, la présence d'un chien au bord de la route, le déplacement d'un cycliste ou d'un piéton traversant la chaussée, les manoeuvres d'un autre véhicule, etc.

Les modules balises peuvent être réalisés en divers modes d'exécution. Ils peuvent par exemple être équipés de balises gonflables à l'air, à l'eau ou avec un autre fluide, être équipés de gicleurs pour produire des jets d'eau, des brouillards lumineux ou autres, etc.

Les modules balises peuvent avantageusement être complétés par un système lumineux agencé pour mettre en évidence des points de fuite dont les droites concourent de part et d'autre de la zone ou de zones d'évitements possibles et dont l'activation sélective est également effectuée à partir de la centrale de commande. Ceci permet le perfectionnement de la maîtrise automobile par l'apprentissage d'une bonne technique visuelle dans les situations à risques.

Grâce à la simulation concrète de situations routières à risques, l'invention permet l'apprentissage efficace et accéléré de la conduite et de la maîtrise automobile. La simulation peut être adaptée instantanément par un instructeur en tenant compte des capacités et besoins de chaque stagiaire ainsi que de l'état et/ou des spécificités de son véhicule. L'instructeur peut à distance faire démarrer un programme d'exercice, le modifier en cours d'exercice, peaufiner le guidage du stagiaire en exercice, et arrêter le programme en cours lorsque l'exercice s'avère critique ou dangereux.

Par ailleurs, le dispositif suivant l'invention n'est pas seulement intéressant pour la formation à la conduite automobile, mais il peut également être utile pour sensibiliser tous les usagers de la route aux dangers de la route. Un aspect particulièrement avantageux de l'invention réside en ce que la centrale de commande, judicieusement informatisée, peut gérer un ensemble d'informations concernant les exercices programmés et traiter ces informations afin d'analyser les situations routières. Ceci peut permettre de comprendre le comment et le pourquoi des accidents de la route et aider à résoudre un grand nombre de litiges en matière d'accidents de la circulation. Il est également possible ainsi d'analyser le comportement des conducteurs et des véhicules.

Un mode de réalisation de l'invention est décrit dans ce qui suit à titre d'exemple nullement limitatif, à l'aide des dessins joints.

Dans ces dessins :
- la figure 1 représente une vue en plan d'une piste d'apprentissage équipée d'un dispositif suivant l'invention;
- la figure 2 est un schéma fonctionnel du dispositif suivant l'invention;
- la figure 3 montre une vue en coupe transversale d'un module balise;
- les figures 4 et 5 sont des vues en coupe suivant les lignes III-III et IV-IV, respectivement, de la figure 3;
- la figure 6 est une vue de détail, à échelle agrandie, illustrant le montage d'une balise sur le module de la figure 3.

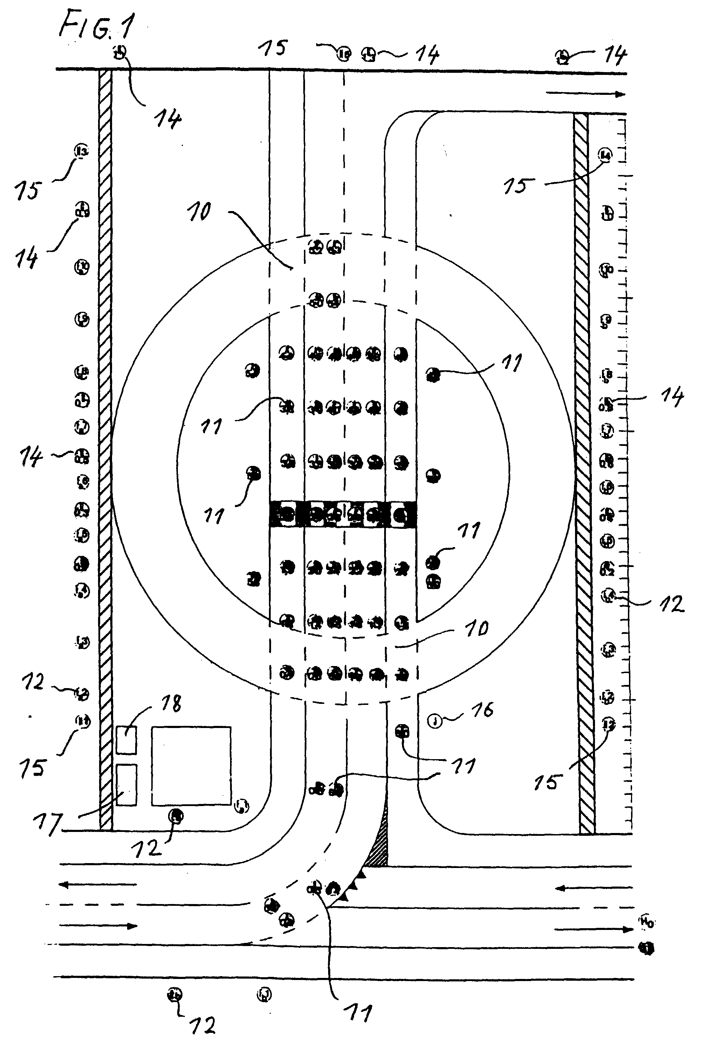

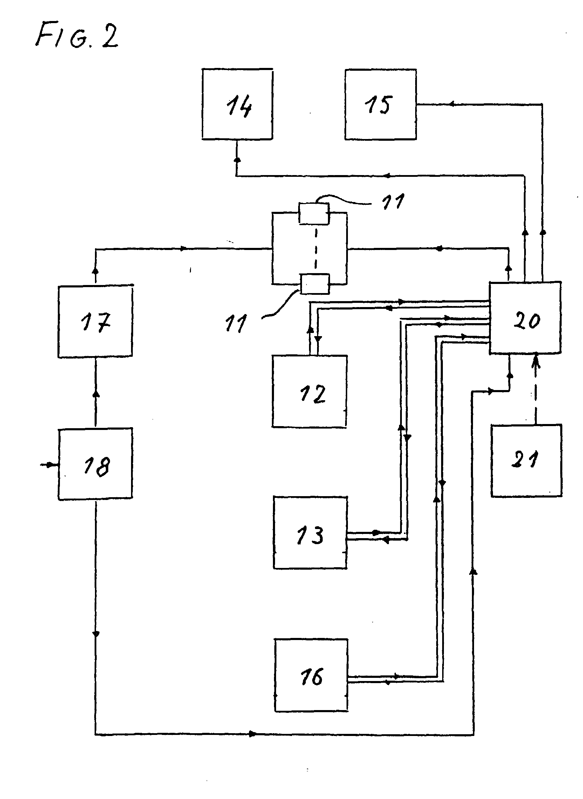

Se reportant à la figure 1, l'installation suivant l'invention comprend une piste de circulation routière 10 sur et autour de laquelle sont répartis une pluralité de modules balises 11, des cellules photoélectriques d'activation 12 et de désactivation 13 des modules balises, des spots de direction 14 et d'alarme 15, ainsi qu'un radar de paramétrisation 16. Tous ces dispositifs sont reliés à une centrale de commande 20 associée à une télécommande 21 comme montré sur le schéma fonctionnel de la figure 2. Sur celle-ci, le signe de référence 17 désigne un hydrophore, un compresseur d'air ou autre pour alimenter les balises comme on le verra plus loin, et le signe de référence 18 désigne un coffret d'alimentation.

Les modules balises 11 sont enfouis dans le sol et portent des balises déployables ou gonflables ou comportent des moyens pour former des balises, par exemple des gicleurs actionnables pour former des jets d'eau ou des brouillards lumineux. Les modules balises 11 sont commandés par la centrale de commande 20 pour activer et désactiver leurs balises. La centrale de commande 20 fonctionne sous la direction de programmes en tenant compte des informations et paramètres qu'elle reçoit du radar 14 et des cellules photoélectriques d'activation 12 et de désactivation 13 qui captent le passage du véhicule en exercice et du radar 16 qui détecte la vitesse du véhicule. La cellule d'activation 12 commande le démarrage du programme d'exercice en réponse au passage du véhicule à un endroit déterminé et la cellule de désactivation 13 commande l'arrêt du programme d'exercice et la mise au repos des modules en réponse au passage du véhicule à un autre endroit déterminé.

Lorsqu'un véhicule s'engage sur la piste 10, il active le système en passant devant la cellule d'activation 12 et le radar 16 envoie à la centrale de commande 20 des informations représentant la vitesse du véhicule. Sur cette base, la centrale de commande 20 génère une séquence de signaux de commande pour les modules balises 11 afin d'activer sélectivement des balises dans un ordre fixé par un programme d'exercice simulant diverses situations routières à risques. En réponse à un signal de commande, chaque module balise active des balises qui simulent des obstacles en présence desquels le conducteur stagiaire doit réagir.

Lorsque le véhicule en exercice arrive à la fin du parcours de test, il passe devant la cellule de désactivation 13 qui envoie un ordre de désactivation à la centrale de commande 20, et celle-ci arrête alors le programme de test. A tout moment durant le programme, l'instructeur peut, grâce à la télécommande 21, intervenir à distance dans le lancement, l'arrêt ou le déroulement du programme d'exercice ou pour guider le stagiaire en exercice vers une zone d'évitement en déclenchant l'allumage de spots de guidage aériens 14 (de couleur verte par exemple) ou pour arrêter immédiatement l'exercice en déclenchant d'urgence un spot d'alarme 15 (de couleur rouge par exemple).

La programmation des exercices, c'est-à-dire la programmation de l'activation sélective des modules balises peut être effectuée par des moyens connus quelconques, cartes perforées ou magnétiques, informatiques, etc.

L'activation des balises peut se faire par des moyens quelconques, mécaniques, électriques, pneumatiques, fluidiques, hydrauliques, etc. L'exemple de réalisation illustré dans les dessins prévoit une commande pneumatique des balises. Celles-ci sont alors alimentées en air comprimé fourni par un compresseur d'air 17. L'ensemble de l'installation est alimentée en courant électrique par le coffret électrique 20 qui alimente le compresseur d'air en 380 V par exemple et la centrale de commande en 220 V.

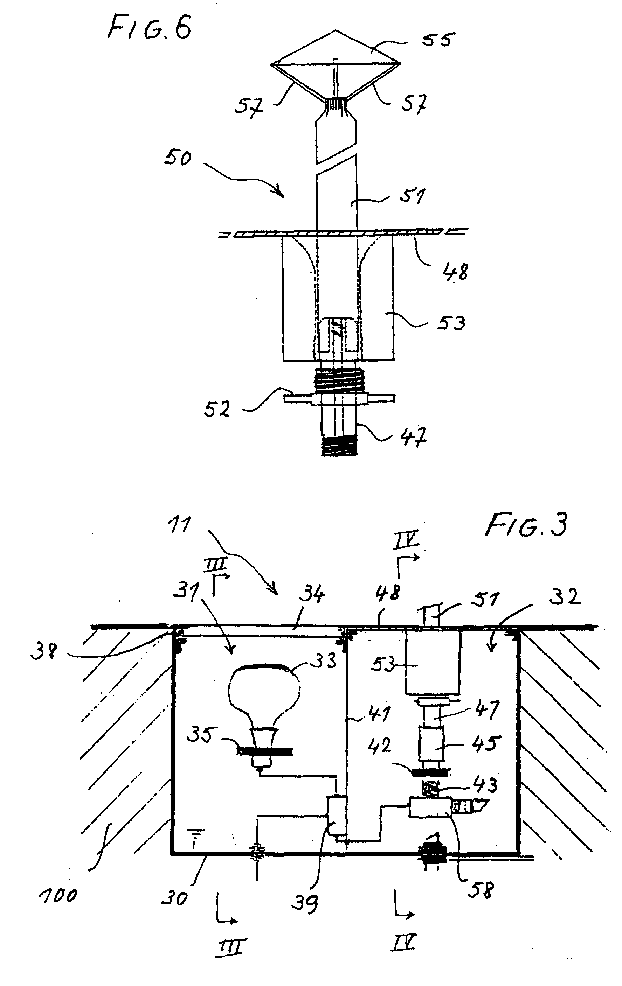

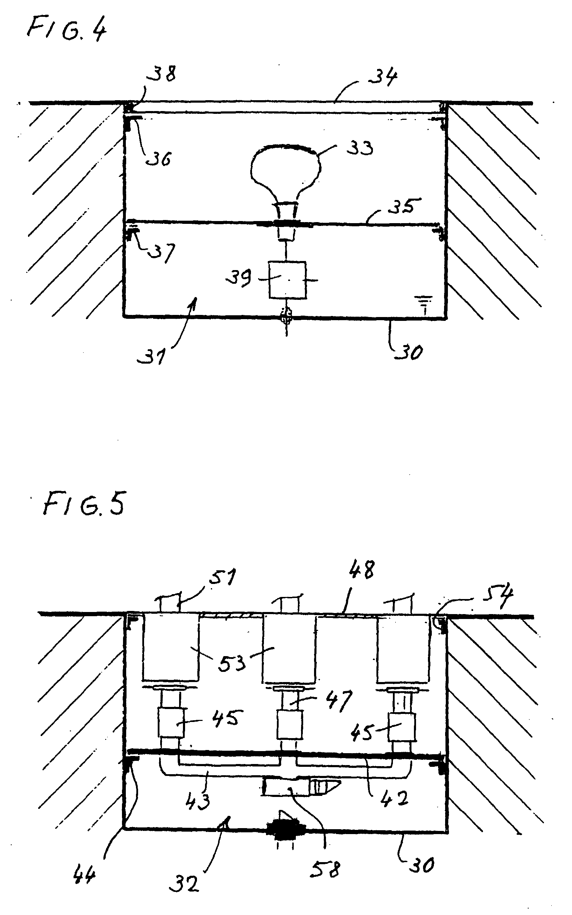

Les figures 2 à 4 représentent, à titre d'exemple, un mode d'exécution d'un module balise avec balises gonflables à l'air.

Le module est fabriqué en matière inoxydable. Il est étanche et peut avoir différents volumes et différentes formes. Les éléments qu'il contient peuvent également varier en forme comme en nombre. Dans l'exemple illustré, le caisson 30 qui forme l'enveloppe du module est un parallélépipède ayant une base de 30 cm de côté et 20 cm de haut, avec des parois de 2 mm d'épaisseur. Il est solidement fixé au sol 100 par ses rebords grâce à des tire-fonds.

Le module comprend un compartiment éclairage 31 et un compartiment pneumatique 32. Le compartiment éclairage contient un ensemble spot 33 de 100 Watts fixé sur une rampe 35 en inoxydable de 140 mm de long, 50 mm de large et 2 mm d'épaisseur, est vissée sur des supports en équerre 37 soudés au caisson. Une vitre 34 de 280 mm de long, 130 mm de large et 10 mm d'épaisseur ferme le compartiment. Elle est posée sur une cornière en équerre 36, taraudée et soudée au caisson, dans laquelle les vis de l'encadrement de la vitre viennent se loger. Le tout est rendu hermétique grâce à un joint d'étanchéité 38. L'alimentation électrique se fait en 220 V et un raccordement à la terre est également prévu. Le câble d'alimentation arrive dans une boîte de dérivation 39 d'où repartent les alimentations du compartiment éclairage et du compartiment pneumatique. Les câbles sont protégés du caisson par des presse-étoupe qui assurent également l'étanchéité.

Le compartiment pneumatique 34 est séparé du compartiment éclairage par une cloison 41. Le compartiment pneumatique comprend une rampe 42 prenant appui sur des joints anti-vibrations 43 collés sur des supports en équerre 46 soudés au caisson. Sur cette rampe 42 est adapté un collecteur 43 à une entrée et par exemple trois sorties en acier inoxydable de 3/8", sur lesquels sont vissées des vannes à débit variable 45. Sur ces vannes sont vissés les gicleurs 47 formés de tubes en laiton de 65 mm de long, 18 mm de diamètre extérieur et de 4 mm de diamètre intérieur. Ceux-ci sont usinés à 16 mm de diamètre extérieur sur une longueur de 45 mm, y compris le filet en 3/8" de 10 mm de long à l'extrémité. A leur autre extrémité, les tubes sont usinés à 8 mm de diamètre extérieur sur 10 mm de long et quatre fentes de 1 mm de large sur 1 mm de profondeur sont formées dans la paroi intérieure du gicleur, et ce, sur une longueur de 10 mm. Ces fentes servent à donner un mouvement giratoire à l'air comprimé, avant que celui-ci ne pénètre dans les balises.

Sur l'extrémité de chaque gicleur 47 vient se fixer la base 51 d'une balise 50 comme montré par exemple à la figure 6. La base 51 de la balise se fixe sur l'extrémité du gicleur par exemple à l'aide d'une vis-papillon 52 avec un joint d'étanchéité. Une buselure 53 sert au maintien de la balise et à la protection contre le déchirement et/ou le cisaillement de la base 51 de la balise. Chaque buselure 53 est soudée à un couvercle 48 vissé sur une cornière 54 soudée au caisson 30 et fermant le compartiment pneumatique 32 du module. Un joint assure l'étanchéité.

La buselure est usinée à partir d'un cylindre en acier inoxydable de 50 mm de diamètre extérieur, 18 mm de diamètre intérieur et 60 mm d'épaisseur. Le côté qui doit être soudé au couvercle est creusé de façon conique et légèrement arrondie, de manière à obtenir un évasement allant de 18 à 46 mm de diamètre sur une profondeur de 25 mm. Quant au côté dans lequel vient prendre appui le joint conique du gicleur 47 et où se visse la vis-papillon 52, à l'intérieur de laquelle coulisse le corps du gicleur, un filet femelle de 1/2" est usiné sur une profondeur de 10 mm au-dessus duquel un léger cône allant de 20 à 18 mm de diamètre et 15 mm de profondeur est également réalisé.

La balise 50 comporte une base 51 sur laquelle est fixé un mini-ballon 55. La base peut être réalisée en matière synthétique légère et résistante, en caoutchouc, ou autre, par exemple un corps en matière synthétique d'environ 1200 mm de long et de 18 mm de diamètre. A leur partie supérieure, le tube est fermé hermétiquement à l'aide d'un élastique 56 à très forte résistance qui permet un gonflage très rapide du mini-ballon mais aussi, en s'écartant, de libérer le surplus d'air.

Le mini-ballon 55 est retenu par quatre lanières 57 cousues, tout comme l'élastique 56, dans le tissu de la balise. L'air comprimé est introduit dans la balise par une vanne magnétique 58 (Figure 2) et projette les balises à la verticale en les faisant osciller et engendrant ainsi un effet optique de masse.

Il est entendu que le mode de réalisation illustré sur les dessins et décrit ci-avant est donné à titre d'exemple et que des variantes d'exécution peuvent être réalisées, qui relèvent de la compétence ou de l'habileté normales de l'homme du métier. Ainsi par exemple, comme mentionné plus haut, les modules balises peuvent être prévus avec divers types de balises, les modules balises étant équipés, pour activer les balises, de moyens appropriés au type de balise utilisé.

## Revendications

1. Dispositif de simulation et d'analyse de situations routières à risques, caractérisé en ce qu'il comprend une piste de circulation routière (10), plusieurs modules balises (11) répartis sur et/ou autour de la piste routière (10), chaque module balise (11) étant enfoui dans le sol et portant au moins une balise activable (50) comportant des moyens de commande pour activer la ou chaque balise en réponse à un signal de commande,
une centrale de commande (20) agencée pour produire une séquence de signaux de commande pour les modules balises (11) parmi plusieurs séquences de signaux de commande, en réponse à un signal de commande d'activation, et pour produire un signal de commande de désactivation pour désactiver les balises en réponse à un signal de désactivation.

2. Dispositif suivant la revendication 1, caractérisé en ce qu'il comprend en outre un moyen (12) pour produire le signal d'activation précité en réponse au passage d'un véhicule en exercice à un premier endroit.

3. Dispositif suivant la revendication 1 ou 2, caractérisé en ce qu'il comprend en outre un moyen (13) pour produire le signal de désactivation précité en réponse au passage du véhicule en exercice à un second endroit.

4. Dispositif suivant la revendication 1, caractérisé en ce que les balises sont des balises déployables ou gonflables (50).

5. Dispositif suivant la revendication 1, caractérisé en ce que les balises sont constituées par des jets d'eau.

6. Dispositif suivant la revendication 1, caractérisé en ce que les balises sont constituées par des brouillards lumineux.

7. Dispositif suivant la revendication 1, caractérisé en ce qu'il comprend un outre des moyens lumineux (14) pour guider le conducteur stagiaire vers une zone d'évitement.

8. Dispositif suivant l'une quelconque des revendications précédentes, caractérisé en ce que la centrale de commande (20) est associée à une télécommande (21) pour permettre à un instructeur d'intervenir dans le déroulement d'un exercice.

9. Dispositif suivant l'une quelconque des revendications précédentes, caractérisé en ce que la centrale de commande (20) comprend des moyens pour paramétriser les séquences de signaux de commande en réponse à un signal représentatif de la vitesse du véhicule en exercice, captée par un moyen (16) disposé sur la piste routière.

10. Dispositif suivant l'une quelconque des revendications précédentes, caractérisé en ce que la centrale de commande (20) comprend en outre des moyens pour gérer et analyser les informations relatives aux exercices effectués.

11. Module balise comportant un caisson (30) contenant des moyens (47) pour activer au moins une balise, un moyen de commande (45) pour actionner et mettre au repos lesdits moyens (47) d'activation de balise en réponse à un signal de commande d'activation et pour mettre lesdits moyens (47) d'activation de balise au repos en réponse à un signal de commande de désactivation.
